# EUROPÄISCHE PATENTANMELDUNG

(11) **EP 1 745 960 A2**
(43) Veröffentlichungstag der Anmeldung: **24.01.2007**
(21) Anmeldenummer: 06014525.7
(22) Anmeldetag: 13.07.2006
(51) Int. Cl.: B60J 7/12, B60J 1/18

(54) **Cabriolet-Fahrzeug mit einem steil stehenden Heckfenster**

(30) Priorität: 21.07.2005 DE 102005034721
(71) Anmelder: Wilhelm Karmann GmbH, 49084 Osnabrück (DE)
(72) Erfinder: Heselhaus, Udo, 49479 Ibbenbüren (DE)

(57) **Zusammenfassung**

Ein Cabriolet-Fahrzeug (1) mit einem steil stehenden Heckfenster (4), an das sich in geschlossener Stellung oben und seitlich mittelbar oder unmittelbar mit einem flexiblen Bezug (3) versehene Bereiche des Daches (2) anschließen, wird so ausgebildet, dass den Bezugbereichen (3) Rahmenteile (5;6) für das Heckfenster (4) zugeordnet sind, von denen die seitlich (6) neben dem Heckfenster (4) eine Auflagefläche für diese und oberhalb (5) des Heckfensters (4) einen dieses einfassenden Einlaufkanal (9) für dieses bieten.

## Beschreibung

Die Erfindung betrifft ein Cabriolet-Fahrzeug mit einem steil stehenden Heckfenster, an das sich bei geschlossenem Dach oberhalb und seitlich mit einem flexiblen Bezug versehene Bereiche des Daches anschließen, nach dem Oberbegriff des Anspruchs 1.

Bei Cabriolet-Fahrzeugen mit langen Innenräumen und einem steil stehenden Heck, etwa bei Kombi- oder Geländewagen, stellt sich das Problem, das bei einer Öffnung des gesamten Daches ein Dachteilpaket von erheblichen Ausmaßen entsteht, das im Fahrzeug untergebracht werden muss. Damit wird ein erheblicher Raum für das abgelegte Dach benötigt, was auch bei relativ großen Fahrzeugen unerwünscht ist, da der Laderaum häufig intensiv genutzt wird und daher eine Einschränkung für viele Benutzer hinderlich ist.

Dennoch soll die Möglichkeit bestehen, das Dach insgesamt automatisch abzusenken, ohne Hardtopteile oder andere Teilabschnitte vorzusehen, die von Hand entfernt werden müssen.

Der Erfindung liegt das Problem zugrunde, eine Verbesserung der Dachablage bei Steilheckcabrioletfahrzeugen zu erreichen.

Die Erfindung löst dieses Problem durch ein Cabriolet-Fahrzeug mit den Merkmalen des Anspruchs 1 sowie durch ein Cabriolet-Fahrzeug mit den Merkmalen des Anspruchs 3. Hinsichtlich vorteilhafter Ausgestaltungen der Erfindung wird auf die weiteren Ansprüche 2 und 4 bis 9 verwiesen.

In der Ausbildung nach Anspruch 1 ist dadurch, dass das Heckfenster separat absenkbar ist, das Paket aus abzulegenden Dachteilen verkleinert. Die starre und daher in Ablagestellung viel Raum benötigende Heckscheibe ist aus dem Paket ausgenommen, so dass der ansonsten von dieser belegte Raum von anderen Teilen des Daches eingenommen werden kann. Dennoch kann das Dach außerhalb der Heckscheibe durchgehend ausgebildet sein und durchgehend abgelegt werden, indem die das Heckfenster umgebenden Bezugbereiche zur Dachöffnung nach vorne einschwenken.

Die weiter vorne gelegenen Bereiche des Daches können dann gegensinnig durch heckwärtiges Schwenken des von einer Fensterbrüstungslinie aufragenden seitlichen Rahmenteils, der sog. Hauptsäule, über die das Heckfenster umgebenden Bereiche einschwenken, so dass sich ein flaches, zum Beispiel im wesentlichen horizontal liegendes Paket ergibt.

Eine besonders günstige Ausbildung sieht vor, dass die Bezugbereiche Rahmenteile für das Heckfenster mit umfassen, so dass diese Rahmenteile unabhängig vom Heckfenster, das selbst rahmenlos absenkbar ist, nach vorne verschwenkt werden können. Dabei ist es besonders vorteilhaft, wenn die bei geschlossenem Dach seitlich neben dem Heckfenster liegenden Rahmenteile eine Auflagefläche für diese und oberhalb des Heckfensters einen dieses einfassenden Einlaufkanal für dieses bieten. Dadurch muss das Heckfenster nur minimal abgesenkt werden - insbesondere wenn die lichte Weite zwischen den seitlichen Rahmenteilen nach oben hin verjüngt -, bevor das Vorschwenken der umgebenden Rahmenteile eingeleitet werden kann. Die Dachöffnung ist erheblich beschleunigt, da nicht die vollständige Absenkung des Heckfensters abgewartet werden muss.

Besonders günstig ist dabei die im wesentlichen heckwärts weisende äußere Begrenzung des Einlaufkanals zumindest teilweise durch eine dem oberen Rand des Heckfenster zugeordneten Windleitkörper, insbesondere durch einen auf den Bezug oberhalb des Heckfensters aufgesetzten Spoiler, gebildet. Damit ergibt sich eine Doppelfunktion des Spoilers oder dergleichen, der zur Windleitfunktion die konstruktive Kanalbegrenzungsfunktion erhält.

Hierbei erweist es sich als besonders gut, wenn der Bezug in Fahrtrichtung vor der Unterkante des Spoilers in einer Halterung des Einlaufkanals angebunden ist und vor allem die den Einlaufkanal begrenzende Unterkante des Spoilers in Verlängerung der Halterung des Einlaufkanals liegt. Dann kann der Abstand zwischen dem oberen Heckfensterrand und dem Spoiler vermindert werden. Es ergibt sich eine fast bündige - und nicht deutlich abgestufte - Lage der Heckscheibe zu der Bezugaußenfläche, wenn die Heckscheibe im wesentlichen fluchtend zu der den Bezug aufnehmenden Halterung in den Einlaufkanal eintritt.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

### In der Zeichnung zeigt:

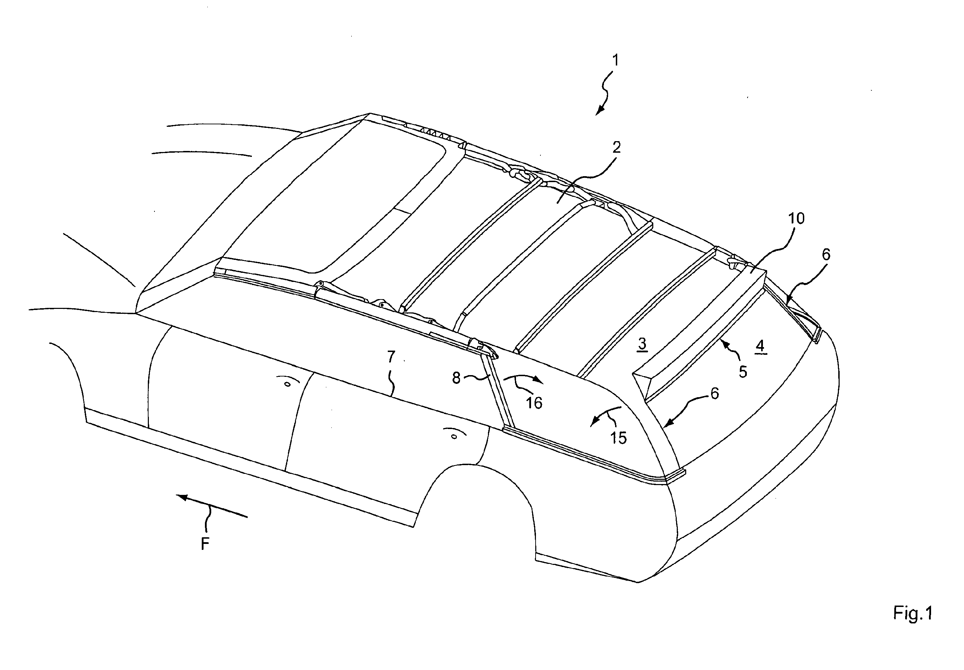

- Fig. 1: eine schematische perspektivische Ansicht von schräg hinten eines erfindungsgemäßen Cabriolet-Fahrzeugs bei geschlossenem Dach mit der Übersicht halber transparent eingezeichnetem Bezug,

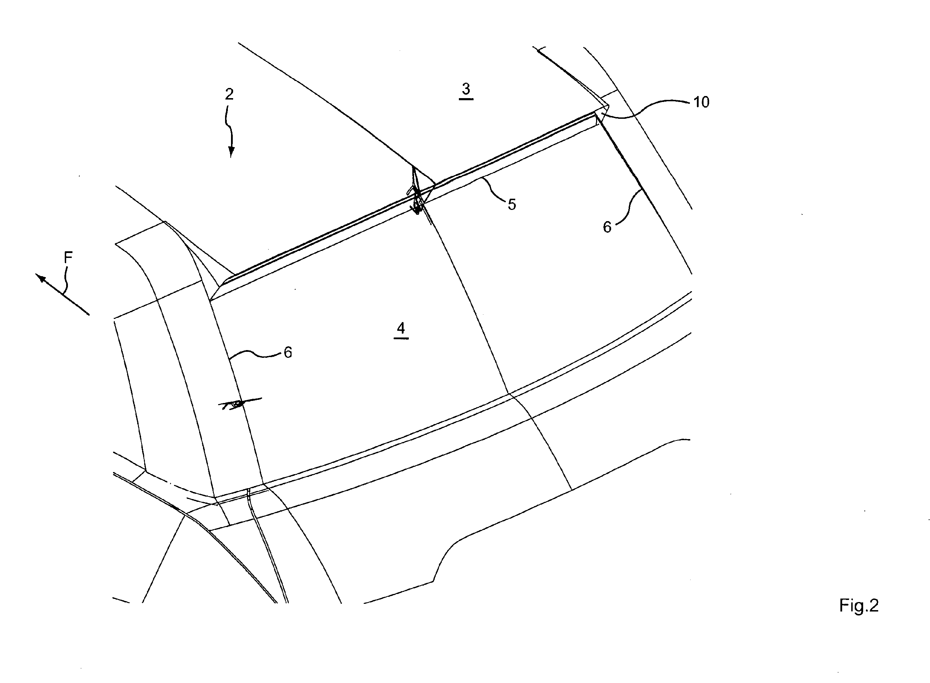

- Fig. 2: den Heckbereich des in Fig. 1 dargestellten Fahrzeugs,

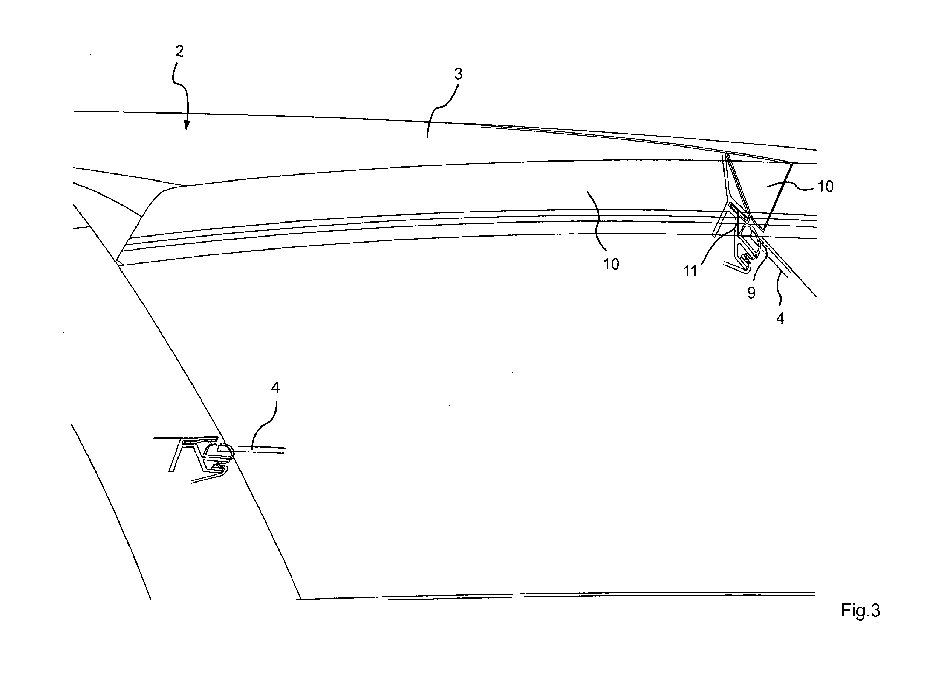

- Fig. 3: eine Ausschnittsvergrößerung in Fig. 2,
- Fig. 4: einen Schnitt im seitlichen und einen im oberen Rahmenteil der Heckfenstereinfassung,
- Fig. 5: eine ähnliche Ansicht wie Fig. 4 eines alternativ gestalteten Spoilers,
- Fig. 6: eine Ansicht des Fahrzeugs von hinten mit geschlossenem Heckfenster.
- Fig. 7: eine Ansicht des Fahrzeugs von hinten mit ein wenig abgesenktem Heckfenster.

Das in der Zeichnungsfigur 1 nur schematisch dargestellte Cabriolet-Fahrzeug 1 umfasst ein bewegliches Dach 2, das in seinem geöffneten Zustand im heckwärtigen Karosseriebereich ablegbar ist. Das Dach 2 kann unterschiedlich ausgebildet sein und auch teilweise starre Dachteile umfassen. In jedem Fall ist ein oberhalb und seitlich eines Heckfensters 4 gelegener Teil des Daches 2 mit einem flexiblen Bezug 3, der hier nur zur besseren Übersichtlichkeit transparent eingezeichnet ist, versehen.

Das in der Zeichnung dargestellte Dach 2 hat eine relativ lange Ausbildung und ist zum Beispiel auch geeignet, den Innenraum eines Kombi-, Van- oder Geländefahrzeugs mit zwei oder mehr Sitzreihen hintereinander bis über einen Kofferraum hin zum Steilheckabschluss des Fahrzeugs zu überdecken.

Das Heckfenster 4 ist separat absenkbar, zum Beispiel in eine darunter liegende Heckklappe, die seitlich oder nach unten aufschwenken kann, einfahrbar. Ein oberer Rahmenteil 5 und seitliche Rahmenteile 6, die das geschlossene Heckfenster 4 U-förmig umgeben und an denen der Dachbezug 3 gehalten ist, sind hingegen Bestandteil des durchgehenden Daches 2 und mit diesem zur Dachöffnung nach vorne in Richtung des Pfeils 15 einfaltbar, wobei weiter vorne gelegene Bereiche des Daches 2 durch rückwärtiges Schwenken eines von einer Fensterbrüstungslinie 7 aufragenden seitlichen Rahmenteils 8, der sog. Hauptsäule, über die das Heckfenster 4 umgebenden und an die Rahmenteile 5, 6 anschließenden Bereiche gegensinnig in Richtung des Pfeils 16 ablegbar sind.

Die seitlichen Rahmenteile 6 bilden für das Heckfenster 4 nur eine dieses nicht übergreifende, sondern im wesentlichen nach vorne abstützende Auflagefläche. Oberhalb des Heckfensters 4 ist hingegen durch das Querrahmenteil 5 ein die Scheibe 4 einfassender Einlaufkanal 9 für dieses gebildet.

Oberhalb des Rahmenteils 5 ist dem Dach 2 ein Spoiler oder ähnliche Luftleiteinrichtung 10 zugeordnet, der hier auf den Bezug 3 aufgesetzt ist, wobei der Bezug 3 leicht unterhalb des Spoilers 10 und in Fahrtrichtung F vor diesem in einem Halterungskanal 11 des Rahmenteils 5 festgelegt ist.

Der Spoiler 10 kann zum Beispiel ein massives Gummi- oder Kunststoffteil ausbilden, das hier eine mehr oder weniger dreieckige Querschnittsgestalt aufweist. Mit seiner Unterkante 12 bildet dieser Spoiler 10 teilweise oder vollständig eine Wandung 13 des Einlaufkanals 9 für das Heckfenster 4 aus. Diese Wandung 13 ist unabhängig von dem Kanal 11, in dem der Bezug 3 festgelegt ist, sondern liegt hinter bzw. schräg unter diesem.

Dadurch wird es möglich, dass die den Einlaufkanal 9 oberseitig begrenzende Unterkante 12 des Spoilers in Verlängerung des Halterungskanals 11 und nahezu fluchtend zu diesem liegt. Dies wäre bei einer Nutzung des Halterungskanals 11 auch für die Heckscheibe 4 nicht möglich: Dann müsste diese deutlich unterhalb des Bezugs in den Kanal 11 einlaufen.

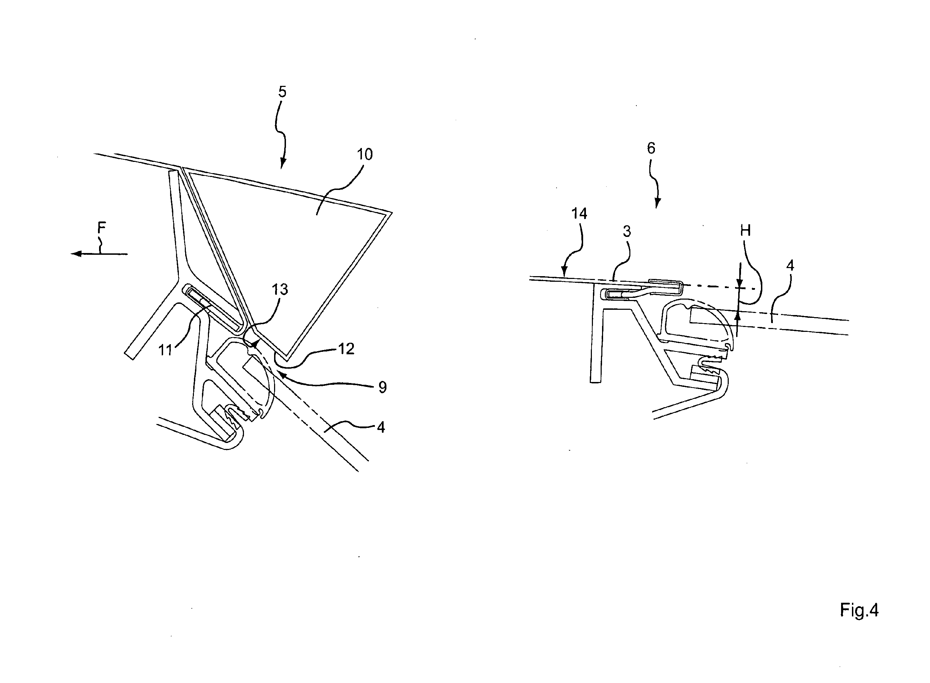

Durch die Erfindung ist hingegen erreicht, dass ein Höhenversatz H zwischen der Bezugaußenfläche 14 und der nach außen zeigenden Seite des Heckfensters 4 minimiert ist, was insbesondere für die seitlichen Rahmenteile 6 von Bedeutung ist, wie in Fig. 4 deutlich wird:
Die Heckscheibe 4 liegt mit ihrer Außenseite nahezu fluchtend zu der Außenfläche 14 des Bezugs 3, ohne dass es hier eine störende Stufe gäbe. Mit der Erfindung ist ein einheitliches Erscheinungsbild mit einem nahezu glattflächigen Übergang zwischen Heckfenster 4 und umgebendem Bezug 3 an den seitlichen Rahmenteilen 6 erreicht.

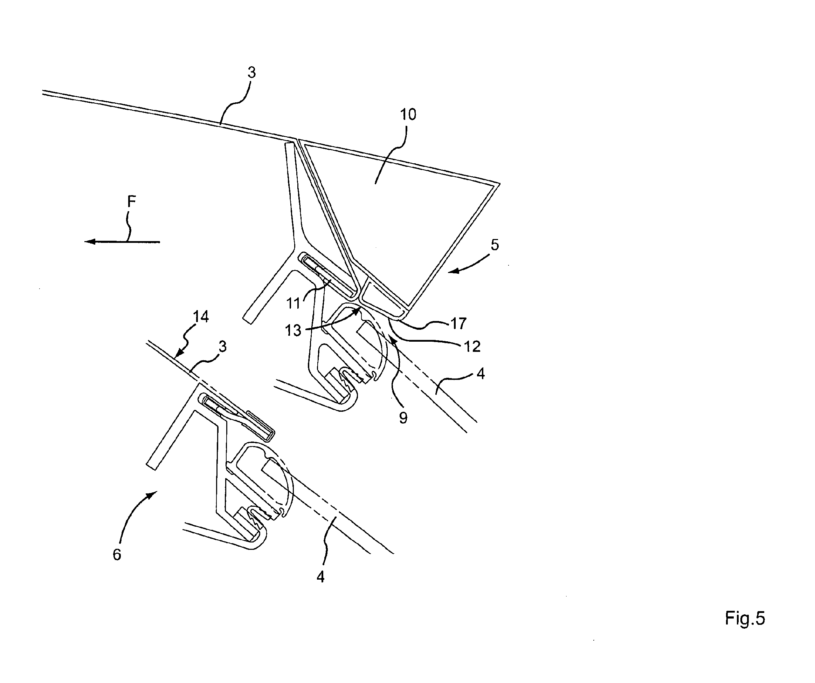

In Fig. 5 ist alternativ zur Ausbildung nach Fig. 4 noch eine nach unten an den Spoiler 10 angesetzte Erweiterung 17 dargestellt, die auch die eigentliche Dichtungsfunktion gegenüber dem Heckfenster 4 ausübt. Damit muss der eigentliche Spoiler 10 in seiner Form und Festigkeit nicht verändert werden, sondern es kann jedweder Spoiler durch eine entsprechende flexible Erweiterung 17 erfindungsgemäß angepasst werden. Auch eine solche Erweiterung 17 erstreckt sich zumindest weitgehend über die Breite der Oberkante des Heckfensters 4, so dass nicht nur kurze einzelne Führungsnocken vorgesehen sind. Das Einlaufen in den Kanal 9 ist dadurch sehr zuverlässig.

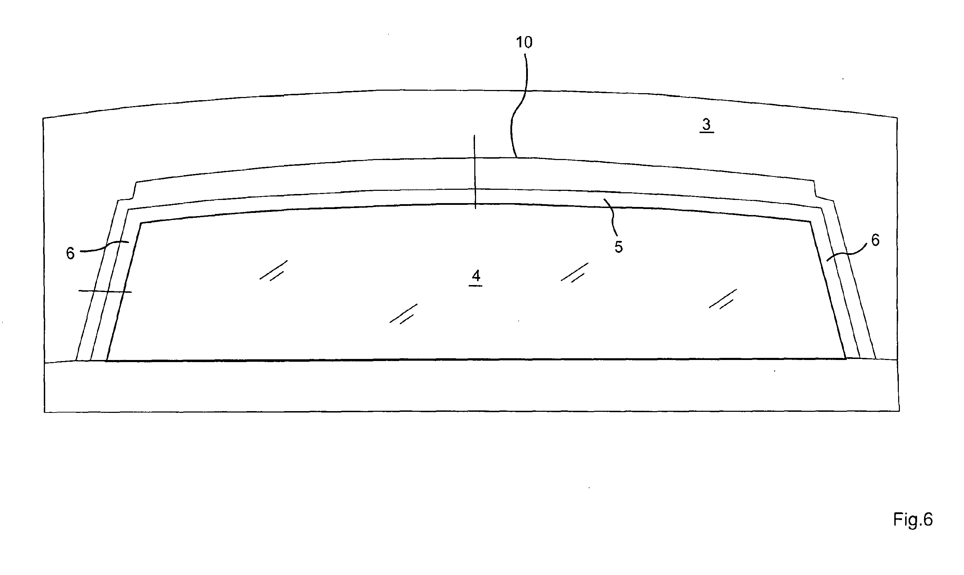

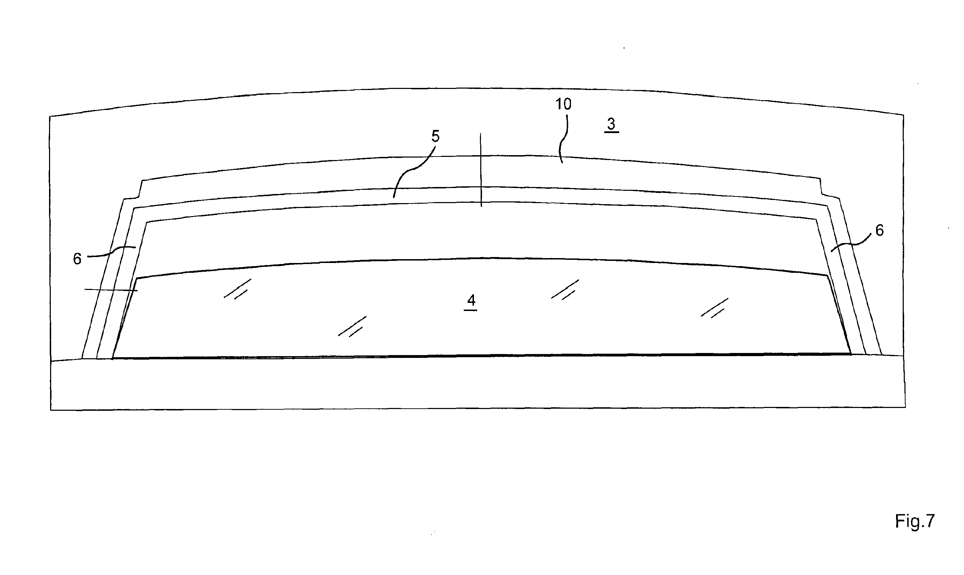

Wie im Übergang von Figur 6 zu Figur 7 dargestellt ist, reicht schon ein sehr geringes Absenken des Heckfensters 4, um dieses, da es seitlich auf den Rahmenteilen 6 nur aufliegt, freizugeben und das Dach 2 noch in der Bewegung des Heckfensters 4 nach vorne schwenken zu können. Insbesondere ist hierfür auch hilfreich, wenn die seitlich das Heckfenster 4 einfassenden Rahmenteile 6 nach oben hin eingezogen sind. Dachöffnung- und -schließzeiten sind dadurch verkürzt.

## Patentansprüche

1. Cabriolet-Fahrzeug (1) mit einem steil stehenden Heckfenster (4), an das sich in geschlossener Stellung oben und seitlich mittelbar oder unmittelbar mit einem flexiblen Bezug (3) versehene Bereiche des Daches (2) anschließen,
**dadurch gekennzeichnet,**
**dass** das Heckfenster (4) separat absenkbar ist und in dessen abgesenkter Stellung der hintere Dachabschnitt mit den umgebenden Bezugbereichen (3) zur Dachöffnung nach vorne (15) einschwenkbar ist.

2. Cabriolet-Fahrzeug (1) nach Anspruch 1,
**dadurch gekennzeichnet,**
**dass** weiter vorne gelegene Bereiche des Daches (2) durch heckwärtiges (16) Schwenken eines von einer Fensterbrüstungslinie (7) aufragenden seitlichen Rahmenteil (8), der sog. Hauptsäule, über die das Heckfenster (4) umgebenden Bereiche ablegbar sind.

3. Cabriolet-Fahrzeug (1) mit einem steil stehenden Heckfenster (4), an das sich in geschlossener Stellung oben und seitlich mittelbar oder unmittelbar mit einem flexiblen Bezug (3) versehene Bereiche des Daches (2) anschließen, insbesondere nach einem der Ansprüche 1 oder 2,
**dadurch gekennzeichnet,**
**dass** den Bezugbereichen (3) Rahmenteile (5;6) für das Heckfenster (4) zugeordnet sind, von denen die seitlich (6) neben dem Heckfenster (4) eine Auflagefläche für diese und oberhalb (5) des Heckfensters (4) einen dieses einfassenden Einlaufkanal (9) für dieses bieten.

4. Cabriolet-Fahrzeug (1) nach Anspruch 3,
**dadurch gekennzeichnet,**
**dass** eine im wesentlichen heckwärts weisende äußere Begrenzung des Einlaufkanals (9) zumindest teilweise durch eine dem Dach (2) nahe dem oberen Rand des Heckfenster (4) zugeordneten Windleitkörper (10) gebildet ist.

5. Cabriolet-Fahrzeug (1) nach einem der Ansprüche 1 bis 4,
**dadurch gekennzeichnet,**
**dass** der Windleitkörper (10) durch einen auf den Bezug (3) oberhalb des Heckfensters (4) aufgesetzten Spoiler (10) gebildet ist.

6. Cabriolet-Fahrzeug (1) nach Anspruch 5,
**dadurch gekennzeichnet,**
**dass** der Bezug (3) in Fahrtrichtung (F) bezüglich der Fahrtrichtung (F) vor der Unterkante (12) des Spoilers (10) in einer Halterung (11) des Einlaufkanals (9) angebunden ist.

7. Cabriolet-Fahrzeug (1) nach Anspruch 6,
**dadurch gekennzeichnet,**
**dass** die den Einlaufkanal (9) begrenzende Unterkante (12) des Spoilers (10) in Verlängerung der Halterung (11) des Einlaufkanals (9) liegt.

8. Cabriolet-Fahrzeug (1) nach einem der Ansprüche 1 bis 7,
**dadurch gekennzeichnet,**
**dass** die Heckscheibe (4) im wesentlichen fluchtend zu der den Bezug aufnehmenden Halterung (11) in den Einlaufkanal (9) eintritt.
